# EUROPÄISCHE PATENTANMELDUNG

(11) **EP 4 169 773 A1**
(43) Veröffentlichungstag der Anmeldung: **26.04.2023**
(21) Anmeldenummer: 22201057.1
(22) Anmeldetag: 12.10.2022
(51) Int. Cl.: B60R 3/00, B60R 19/56, B62D 21/02, B62D 21/15, B62D 29/00

(54) **VORRICHTUNG ZUM BESTEIGEN EINES KRAFTFAHRZEUGS**

(30) Priorität: 25.10.2021 DE 102021127614
(71) Anmelder: MAN Truck & Bus SE, 80995 München (DE)
(72) Erfinder: Schmitz, Andreas, 80995 München (DE)
(74) Vertreter: v. Bezold & Partner Patentanwälte - PartG mbB

(57) **Zusammenfassung**

Die Erfindung betrifft u. a. eine Vorrichtung zum Besteigen eines Kraftfahrzeugs (10). Die Vorrichtung weist eine, vorzugsweise im Wesentlichen plattenförmige, Crashstruktur (16) auf, die dazu ausgebildet ist, sich unter Energieabbau bei einem Aufprall vorbestimmt zu verformen. Die Crashstruktur (16) weist eine, vorzugsweise rechteckförmige, Aussparung (24) auf. Eine, vorzugsweise bewegbare, Trittstufe (14) zum Besteigen des Kraftfahrzeugs (10) ist in der Aussparung (24) angeordnet. Vorteilhaft ist die Integration der Trittstufe in die Crashstruktur besonders bauraumgünstig und aerodynamisch.

## Beschreibung

Die Erfindung betrifft eine Vorrichtung zum Besteigen eines Kraftfahrzeugs und ein Kraftfahrzeug mit einer Vorrichtung zum Besteigen des Kraftfahrzeugs.

Kraftfahrzeuge, wie beispielsweise Lastkraftwagen oder Baumaschinen, können an unterschiedlichen Positionen mit Trittstufen ausgestattet sein, um unterschiedliche Bereiche des Kraftfahrzeugs zu erreichen. Beispielsweise können mittels Trittstufen ein Fahrerhaus, ein Aufbau oder eine Arbeitsplattform des Kraftfahrzeugs leichter erreicht werden. Die Trittstufen können dahingehend nachteilig sein, dass sie vergleichsweise viel Bauraum benötigen und eine Aerodynamik des Kraftfahrzeugs verschlechtern.

Beispielsweise offenbart die DE 10 2018 001 924 A1 eine Einstiegsvorrichtung für ein Kraftfahrzeug. Die Einstiegsvorrichtung kann im Bereich einer Seitenverkleidung angeordnet sein. Die Einstiegsvorrichtung weist ein Gehäuse auf, in dem eine Trittstufe angeordnet ist.

Der Erfindung liegt die Aufgabe zu Grunde, eine verbesserte Vorrichtung zum Besteigen eines Kraftfahrzeugs zu schaffen. Vorzugsweise soll die Vorrichtung hinsichtlich eines Bauraumbedarfs verbessert sein.

Die Aufgabe wird gelöst durch die Merkmale des unabhängigen Anspruchs. Vorteilhafte Weiterbildungen sind in den abhängigen Ansprüchen und der Beschreibung angegeben.

Ein Aspekt betrifft eine Vorrichtung zum Besteigen eines Kraftfahrzeugs. Die Vorrichtung weist eine, vorzugsweise im Wesentlichen plattenförmige, Crashstruktur auf, die vorzugsweise dazu ausgebildet ist, sich unter Energieabbau bei einem Aufprall vorbestimmt zu verformen, wobei die Crashstruktur eine, vorzugsweise rechteckförmige, Aussparung aufweist. Die Vorrichtung weist eine, vorzugsweise bewegbare, Trittstufe zum Besteigen des Kraftfahrzeugs auf, wobei die Trittstufe in der Aussparung angeordnet ist.

Vorteilhaft ermöglicht die Vorrichtung eine besonders bauraumsparende Anordnung der Trittstufe. Bei Montage an einem Kraftfahrzeug, das ohnehin eine Crashstruktur aufweist, wird tatsächlich kein zusätzlicher Bauraum für die Trittstufe benötigt. Die Trittstufe kann innerhalb des für die Crashstruktur vorgehaltenen Bauraums integriert werden. Andererseits ist es auch möglich, bei einem Kraftfahrzeug mit einer Trittstufe auf bauraumgünstige Weise eine Crashstruktur zu ergänzen. Die Crashstruktur und die Trittstufe können sich beispielsweise einen Bauraum in einer Querrichtung des Kraftfahrzeugs teilen, nämlich dadurch, dass die Trittstufe in der Aussparung angeordnet ist. In anderen Worten, das Kraftfahrzeug kann die Trittstufe und die Crashstruktur auf bauraumsparende Weise nicht hintereinander (z. B. bezüglich einer Querachse des Kraftfahrzeugs) aufweisen, sondern ineinander. Es besteht auch die Möglichkeit, dass die Vorrichtung besonders aerodynamisch ist. Durch die Anordnung der Trittstufe in der Aussparung kann beispielsweise verhindert werden, dass die Trittstufe über eine Längsaußenseite des Kraftfahrzeugs aerodynamisch ungünstig übersteht.

Vorzugsweise ist die Crashstruktur dazu ausgebildet, sich derart vorbestimmt zu verformen, dass die Crashstruktur nicht penetriert wird, eine Penetrierung erschwert und/oder sich flächig an einer hinter der Crashstruktur angeordneten Struktur (z. B. Gehäuse einer Traktionsbatterie) abstützt. Beispielsweise kann die vorbestimmte Verformung derart sein, dass sich die Crashstruktur innerhalb ihres Bauraums in sich selbst verformt und dabei Crashenergie abbaut. Beispielsweise kann das vorbestimmte Verformen ein Eindrücken, ein Ausbeulen und/oder ein Verbiegen eines Profils und/oder einer Profilbahn der Crashstruktur aufweisen.

In einem Ausführungsbeispiel ist die Trittstufe zwischen einer, vorzugsweise horizontal ausgerichteten, Gebrauchsstellung (bzw. Öffnungsstellung) und einer, vorzugsweise vertikal ausgerichteten, Nichtgebrauchsstellung (bzw. Schließstellung) bewegbar. Vorteilhaft kann somit weiter Bauraum eingespart werden, z. B. bezüglich einer Querrichtung des Kraftfahrzeugs. Vorzugsweise kann die Trittstufe in der Nichtgebrauchsstellung selbst als eine (weitere) Crashstruktur wirken, die innerhalb der Aussparung der Crashstruktur angeordnet ist. Die Trittstufe selbst kann somit den durch die Aussparung geschwächten Bereich der Crashstruktur schützen und damit beispielsweise die hinter der Crashstruktur angeordnete Einrichtung, z. B. eine Traktionsbatterie, schützen.

In einem weiteren Ausführungsbeispiel füllt die Trittstufe in der Nichtgebrauchsstellung die Aussparung (z. B. teilweise, mindestens zur Hälfte, mindestens zu zwei Drittel, mindestens zu drei Viertel und/oder im Wesentlichen vollständig). Alternativ oder zusätzlich, liegt die Trittstufe in der Nichtgebrauchsstellung in einer Ebene, vorzugsweise Vertikalebene, mit der Aussparung und/oder der Crashstruktur. Alternativ oder zusätzlich ist die Trittstufe dazu ausgebildet, in der Nichtgebrauchsstellung als eine zusätzliche Crashstruktur innerhalb der Aussparung der Crashstruktur zu wirken. Alternativ oder zusätzlich rahmt die Aussparung die Trittstufe in der Nichtgebrauchsstellung ein (z. B. dreiseitig oder vierseitig). Vorteilhaft kann auf diese Weise besonders viel Bauraum eingespart und/oder eine besonders wirkungsvolle Crashstruktur geschaffen werden.

In einem weiteren Ausführungsbeispiel verstärkt und/oder versteift die Trittstufe die Crashstruktur im Bereich der Aussparung (z. B. im Crashfall und/oder bei der vorbestimmten Verformung der Crashstruktur).

In einer Ausführungsform ist die Aussparung als ein Ausschnitt und/oder eine Öffnung, vorzugsweise Durchgangsöffnung, ausgeführt.

In einer weiteren Ausführungsform bleibt oberhalb der Trittstufe in der Nichtgebrauchsstellung ein Freiraum, vorzugsweise ein Spalt, in der Aussparung zum Ergreifen einer Oberkante der Trittstufe zum Bewegen der Trittstufe in die Gebrauchsstellung frei. Vorteilhaft kann somit eine ergonomische Handhabung der Trittstufe erreicht werden, wobei die Verwendung der Trittstufe als Teil der Crashstruktur erhalten bleibt.

In einer weiteren Ausführungsform ist die Trittstufe (z. B. nach unten) klappbar.

In einer Ausführungsvariante ist die Crashstruktur als eine, vorzugsweise profilierte, Crashbeplankung ausgeführt. Alternativ oder zusätzlich weist die Crashstruktur mehrere (z. B. parallele) Profilbahnen auf, die vorzugsweise einen U-förmigen, V-förmigen oder wellenförmigen Querschnitt aufweisen (und/oder z. B. parallel, senkrecht und/oder schräg zu einer Längsachse der Crashstruktur verlaufen). Alternativ oder zusätzlich ist die Crashstruktur als ein Rollprofil oder ein Strangprofil ausgeführt.

In einer weiteren Ausführungsvariante weist die Crashstruktur eine weitere Aussparung oberhalb der Aussparung auf, und die Vorrichtung weist eine weitere, vorzugsweise bewegbare, Trittstufe zum Besteigen des Kraftfahrzeugs auf, die in der weiteren Aussparung angeordnet ist. Vorzugsweise kann somit beispielsweise eine zu große Schwächung der Crashstruktur durch eine große Aussparung für zwei Trittstufen verhindert werden. Stattdessen kann es zu zwei geringeren lokalen Schwächungen für die beiden Aussparungen kommen, die sich jedoch durch die beiden Trittstufen kompensieren lassen.

Vorzugsweise kann die weitere Aussparung der Crashstruktur wie die Aussparung der Crashstruktur ausgeführt sein.

Bevorzugt kann die weitere Trittstufe wie die Trittstufe ausgeführt sein.

In einer weiteren Ausführungsvariante weist die Vorrichtung ferner eine Seitenverkleidung, vorzugsweise Seitenvollverkleidung, auf. Vorzugsweise kann die Seitenverkleidung die Crashstruktur verkleiden. Alternativ oder zusätzlich kann die Seitenverkleidung eine Aussparung (z. B. einen Ausschnitt und/oder eine Öffnung, vorzugsweise Durchgangsöffnung) aufweisen, die mit der Aussparung der Crashstruktur ausgerichtet ist (z. B. fluchtet) und durch die hindurch die Trittstufe bewegbar ist.

In einer weiteren Ausführungsvariante weist die Vorrichtung eine Traktionsbatterie auf, die von der Crashstruktur geschützt ist (z. B. an mindestens einer Außenseite der Traktionsbatterie). Vorzugsweise kann die Traktionsbatterie in einer Blickrichtung auf eine (z. B. Längs-) Außenseite der Crashstruktur, vorzugsweise geschützt und/oder verdeckt, (z. B. direkt) hinter der Crashstruktur angeordnet sein. Alternativ oder zusätzlich kann die Crashstruktur an einem Gehäuse der Traktionsbatterie befestigt, vorzugsweise verschraubt, sein.

Beispielsweise kann die Crashstruktur zwischen der Seitenverkleidung und der Traktionsbatterie angeordnet sein.

In einem Ausführungsbeispiel weist die Vorrichtung ferner eine Trägerplatte (z. B. Trägerblech) auf, wobei die Trittstufe bewegbar, vorzugsweise klappbar, an der Trägerplatte angebracht ist. Vorzugsweise kann die Trägerplatte in einer Blickrichtung auf eine (z. B. Längs-) Außenseite der Crashstruktur hinter der Crashstruktur angeordnet sein.

Beispielsweise kann die Trägerplatte zwischen der Traktionsbatterie und der Crashstruktur angeordnet sein.

Vorzugsweise kann eine Schwenklagerung (z. B. eine Schwenkachse, ein Drehbolzen oder ein Drehzapfen) die Trägerplatte und die Trittstufe miteinander verbinden.

Ein weiterer Aspekt betrifft ein Kraftfahrzeug, vorzugsweise ein Nutzfahrzeug (z. B. einen Lastkraftwagen oder einen Omnibus). Das Kraftfahrzeug weist eine Vorrichtung wie hierin offenbart auf.

In einem Ausführungsbeispiel weist das Kraftfahrzeug ferner eine Vorderachse und eine Hinterachse auf. Die Crashstruktur kann vorzugsweise an einer Längsaußenseite des Kraftfahrzeugs und/oder zwischen der Vorderachse und der Hinterachse angeordnet sein, bevorzugt auf einer Höhe mit der Vorderachse und der Hinterachse.

In einem weiteren Ausführungsbeispiel weist das Kraftfahrzeug eine Arbeitsplattform auf, wobei die Trittstufe zum Besteigen der Arbeitsplattform angeordnet ist. Vorzugsweise kann die Arbeitsplattform bezüglich einer Vorwärtsfahrtrichtung des Kraftfahrzeugs (z. B. direkt) hinter einem Fahrerhaus des Kraftfahrzeugs angeordnet sein. Alternativ oder zusätzlich kann die Arbeitsplattform oberhalb von einem Fahrzeugrahmen des Kraftfahrzeugs angeordnet sein. Alternativ oder zusätzlich kann mittels der Arbeitsplattform mindestens ein fahrerhausrückseitiger Anschluss des Kraftfahrzeugs und/oder mindestens ein frontseitiger Anschluss eines Anhängers des Kraftfahrzeugs zugänglich sein.

Es ist auch möglich, die Vorrichtung wie hierin offenbart für Personenkraftwagen, geländegängige Fahrzeuge oder Baumaschinen zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Rückansicht eines Kraftfahrzeugs gemäß einem Ausführungsbeispiel der vorliegenden Offenbarung;
- Figur 2: eine perspektivische Ansicht eines Abschnitts einer Längsaußenseite eines Kraftfahrzeugs;
- Figur 3: eine perspektivische Ansicht eines Abschnitts einer Längsaußenseite eines Kraftfahrzeugs ohne Seitenverkleidung;
- Figur 4: einen schematischen Querschnitt durch den Abschnitt von Figur 2 an einer Position einer Trittstufe; und
- Figur 5: einen schematischen Querschnitt durch den Abschnitt von Figur 3 an einer Position einer Trittstufe.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

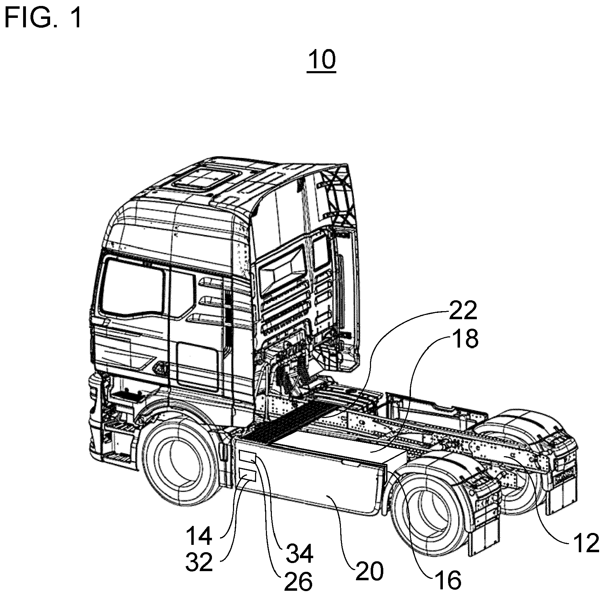

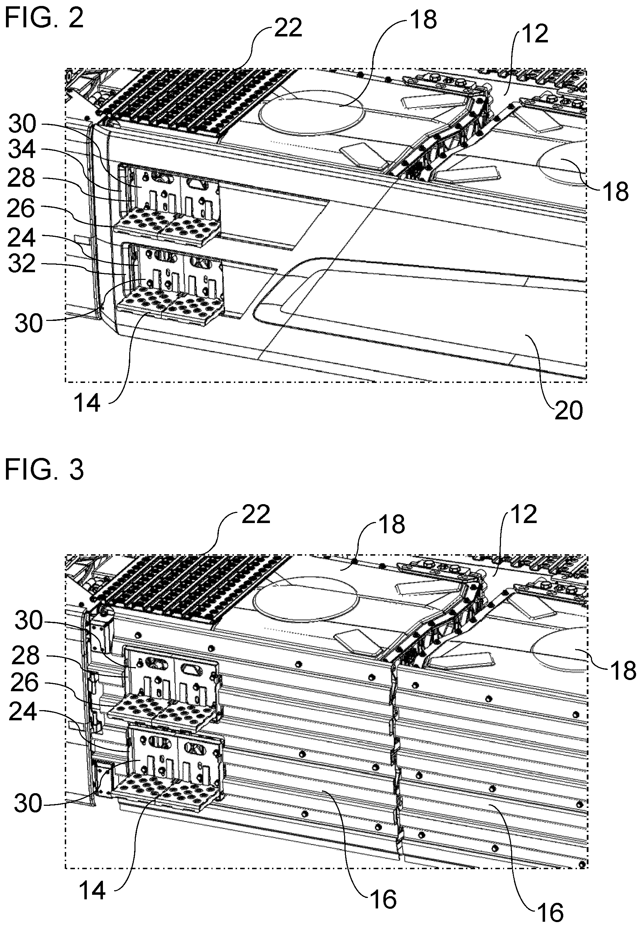

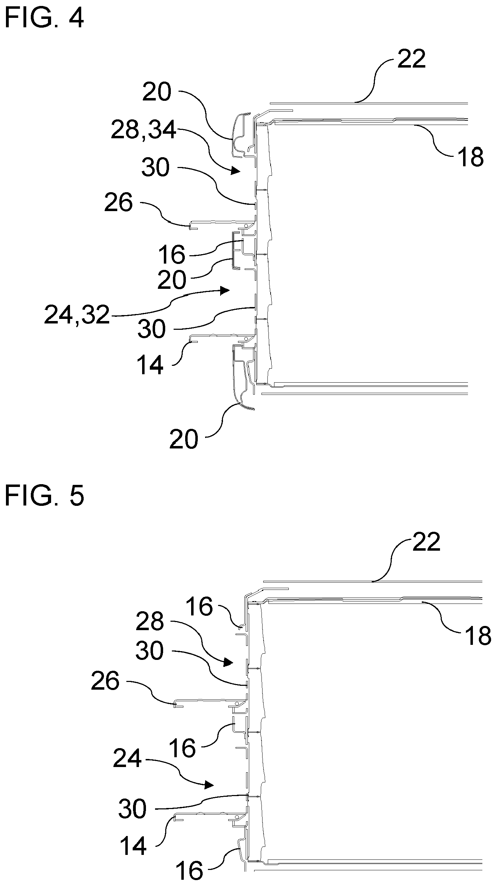

Die Figur 1 zeigt ein Kraftfahrzeug 10. Die Figuren 2 bis 5 zeigen Ansichten eines Abschnitts des Kraftfahrzeugs 10, wobei in den Figuren 3 und 5 eine Seitenverkleidung nicht dargestellt (oder nicht umfasst) ist.

Das Kraftfahrzeug 10 ist vorzugsweise als ein Lastkraftwagen ausgeführt, wie dargestellt ist. Der Lastkraftwagen kann beispielsweise einen Aufbau, z. B. Ladeaufbau, aufweisen (nicht in Figur 1 dargestellt). Alternativ kann der Lastkraftwagen beispielsweise eine Sattelkupplung zum Ankuppeln eines Sattelaufliegers aufweisen (nicht in Figur 1 dargestellt). Es ist möglich, dass das Kraftfahrzeug 10 beispielsweise als ein Omnibus, eine Baumaschine oder eine Landmaschine ausgebildet ist. Es ist auch möglich, dass das Kraftfahrzeug 10 nicht als Nutzfahrzeug ausgeführt ist, sondern beispielsweise als ein Personenkraftwagen (Pkw).

Das Kraftfahrzeug 10 kann einen Fahrzeugrahmen 12 aufweisen. Der Aufbau oder Sattelauflieger kann auf dem Fahrzeugrahmen 12 abgestützt sein. Der Fahrzeugrahmen 12 kann bevorzugt als ein Leiterrahmen ausgeführt sein, wenn das Kraftfahrzeug 10 beispielsweise als ein Lastkraftwagen ausgeführt ist. Der Leiterrahmen kann beispielsweise zwei im Wesentlichen parallele Hauptlängsträger aufweisen. Die beiden Hauptlängsträger können durch mehrere Querträger miteinander verbunden sein. Die mehreren Querträger können entlang einer Längsachse des Nutzfahrzeugs voneinander beabstandet sein. Alternativ kann der Fahrzeugrahmen 12 beispielsweise als ein Gitterrahmen ausgeführt sein, z. B. bei einer Ausführung des Nutzfahrzeugs als ein Lastkraftwagen oder ein Omnibus.

Das Kraftfahrzeug 10 ist bevorzugt elektrisch antreibbar. Beispielsweise kann das Kraftfahrzeug 10 mittels eines zentralen Elektroantriebs antreibbar sein. Der zentrale Elektroantrieb kann beispielsweise unterhalb des Fahrerhauses und/oder zwischen den beiden Hauptlängsträgern des Fahrzeugrahmens 12 angeordnet sein. Alternativ kann das Kraftfahrzeug 10 beispielsweise mittels mehrerer Elektroradnabenantriebe oder mehrerer radnaher Elektroantriebe angetrieben sein.

Das Kraftfahrzeug 10 weist eine Trittstufe 14 und eine Crashstruktur 16 auf. Das Kraftfahrzeug 10 kann eine Traktionsbatterie 18, eine Seitenverkleidung 20 und/oder eine Arbeitsplattform 22 aufweisen.

Mittels der Trittstufe 14 kann das Kraftfahrzeug 10 bestiegen werden. Die Trittstufe 14 kann in der Crashstruktur 16 angeordnet sein. Die Trittstufe 14 kann zwischen einer Gebrauchsstellung und einer Nichtgebrauchsstellung bewegbar sein. Die Figur 1 zeigt die Trittstufe 14 schematisch in der Nichtgebrauchsstellung. Die Figuren 2 bis 5 zeigen die Trittstufe 14 in der Gebrauchsstellung.

In der Gebrauchsstellung kann die Trittstufe 14 begehbar sein. In der Gebrauchsstellung kann die Trittstufe 14 zum Besteigen des Kraftfahrzeugs 10 genutzt werden. Die Trittstufe 14 kann in der Gebrauchsstellung im Wesentlichen horizontal ausgerichtet sein.

In der Nichtgebrauchsstellung kann die Trittstufe 14 vorzugsweise nicht begehbar sein. In der Nichtgebrauchsstellung kann die Trittstufe 14 bei bestimmungsgemäßen Gebrauch nicht zum Besteigen des Kraftfahrzeugs 10 genutzt werden. Die Trittstufe 14 kann in der Nichtgebrauchsstellung im Wesentlichen vertikal ausgerichtet sein.

Beispielsweise kann die Trittstufe 14 zwischen der Gebrauchsstellung und der Nichtgebrauchsstellung verschwenkt bzw. geklappt und/oder verschoben werden. Vorzugsweise kann die Trittstufe 14 aus der Nichtgebrauchsstellung in die Gebrauchsstellung ausgeklappt werden, bevorzugt nach unten. Vorzugsweise kann die Trittstufe 14 aus der Gebrauchsstellung in die Nichtgebrauchsstellung eingeklappt werden, bevorzugt nach oben. Beispielsweise kann eine Schwenkachse der Trittstufe 14 im Wesentlichen parallel zu einer Längsachse des Kraftfahrzeugs 10 sein.

Die Trittstufe 14 kann vorzugsweise ein Blechbauteil sein. Bevorzugt weist die Trittstufe 14 eine profilierte Trittfläche auf, um beispielsweise ein Abrutschen von der Trittfläche zu verhindern.

Die Trittstufe 14 kann an einer Längsaußenseite des Kraftfahrzeugs 10 angeordnet sein. Beispielsweise kann die Trittstufe 14 zwischen einer Vorderachse und einer Hinterachse des Kraftfahrzeugs 10 angeordnet sein. Vorzugsweise kann die Trittstufe 14 auf einer Höhe mit einer Vorderachse, einer Hinterachse und/oder dem Fahrzeugrahmen 12 angeordnet sein.

Die Crashstruktur 16 ist dazu ausgebildet, sich unter Energieabbau bei einem Aufprall vorbestimmt zu verformen, um Crashenergie abzubauen. Vorzugsweise kann die Crashstruktur 16 dazu ausgebildet sein, sich bei einem Seitenaufprall auf die Crashstruktur 16 und/oder die Seitenverkleidung 20 unter Energieabbau vorbestimmt plastisch zu verformen.

Die Crashstruktur 16 ist bevorzugt im Wesentlichen plattenförmig. Die Crashstruktur 16 kann als eine Crashbeplankung ausgeführt sein. Die Crashstruktur 16 ist vorzugsweise profiliert. Beispielsweise kann die Crashstruktur 16 mehrere Profilbahnen (siehe Figur 3) aufweisen. Die Profilbahnen können parallel zueinander sein. Die Profilbahnen können übereinander angeordnet sein. Die Profilbahnen können beispielsweise einen U-förmigen, V-förmigen oder wellenförmigen Querschnitt aufweisen. Die Profilbahnen können beispielsweise parallel zu einer Längsachse des Kraftfahrzeugs 10, parallel zu einer Hochachse des Kraftfahrzeugs 10 oder angeschrägt zu der Längsachse und der Hochachse (also beispielsweise diagonal) verlaufen. Die Crashstruktur 16 kann bevorzugt als ein Rollprofil oder ein Strangprofil ausgeführt sein.

Die Crashstruktur 16 kann zwischen einer Vorderachse und einer Hinterachse des Kraftfahrzeugs 10 angeordnet sein. Die Crashstruktur 16 kann einen Abschnitt einer Längsseite (z. B. Fahrerlängsseite oder Beifahrerlängsseite) des Kraftfahrzeugs 10 vor Aufprallenergie schützend verkleiden. Bevorzugt schützt die Crashstruktur 16 die Traktionsbatterie 18. Beispielsweise kann die Crashstruktur 16 an einer Außenlängsseite der Traktionsbatterie 18 angeordnet sein. Die Crashstruktur 16 kann eine Außenlängsseite der Traktionsbatterie 18 im Wesentlichen vollständig abdecken bzw. schützen. Vorzugsweise kann sich die Crashstruktur 16 im Wesentlichen über eine gesamte Höhe und/oder Länge (bezüglich einer Längsachse des Kraftfahrzeugs 10) der Traktionsbatterie 18 erstrecken.

Die Crashstruktur 16 kann bezüglich einer Vorwärtsfahrtrichtung des Kraftfahrzeugs 10 hinter einem Kotflügel für die Vorderachse und/oder vor einem Kotflügel für die Hinterachse angeordnet sein.

Die Crashstruktur 16 kann sich im Wesentlichen parallel zu einer Längsachse des Kraftfahrzeugs 10 erstrecken. Vorzugsweise ist die Crashstruktur 16 auf Höhe einer Vorderachse, einer Hinterachse und/oder des Fahrzeugrahmens 12 des Kraftfahrzeugs 10 angeordnet. Vorteilhaft ist die Crashstruktur 16 vertikal ausgerichtet.

Die Crashstruktur 16 weist eine Aussparung 24 auf. In der Aussparung 24 ist die Trittstufe 14 angeordnet. Die Aussparung 24 kann beispielsweise als ein Ausschnitt und/oder eine Öffnung, vorzugsweise Durchgangsöffnung, ausgeführt sein. Die Aussparung 24 ist bevorzugt rechteckförmig. Bevorzugt rahmt die Aussparung 24 die Trittstufe 14 in der Nichtgebrauchsstellung ein. Die Aussparung 24 verbindet vorzugsweise eine Außenseite bzw. Vorderseite der Crashstruktur 16 mit einer Innenseite bzw. Rückseite der Crashstruktur 16. Die Rückseite kann beispielsweise hin zu dem Fahrzeugrahmen 12 und/oder zu der Traktionsbatterie 18 gewandt sein.

In der Nichtgebrauchsstellung kann die Trittstufe 14 die Aussparung 24 füllen. In der Nichtgebrauchsstellung kann die Trittstufe 14 in einer Ebene mit der Aussparung 24 und/oder der Crashstruktur 16 liegen. Die Ebene ist bevorzugt eine Vertikalebene, besonders bevorzugt eine Vertikallängsebene des Kraftfahrzeugs 10. Die Trittstufe 14 kann eine Schwächung der Crashstruktur 16 im Bereich der Aussparung 24 verringern oder sogar überkompensieren. Die Trittstufe 14 kann die Crashstruktur 16 im Bereich der Aussparung 24 verstärken und/oder versteifen. Die Verstärkung und/oder Versteifung können in der Nichtgebrauchsstellung und optional zusätzlich in der Gebrauchsstellung der Trittstufe 14 bewirkt sein. In der Nichtgebrauchsstellung kann die Trittstufe 14 die Funktion einer (zusätzlichen) Crashstruktur innerhalb der Crashstruktur 16 bzw. in der Aussparung 24 übernehmen.

Es ist möglich, dass die Trittstufe 14 die Aussparung 24 in der Nichtgebrauchsstellung nicht vollkommen füllt. Beispielsweise kann ein Freiraum, bevorzugt Spalt, oberhalb der Trittstufe 14 freibleiben. Der Spalt kann ein Ergreifen einer Oberkante der Trittstufe 14 in der Nichtgebrauchsstellung ermöglichen. Die ergriffene Trittstufe 14 kann in die Gebrauchsstellung bewegt werden.

Die Trittstufe 14 kann bewegbar an einer Trägerplatte 30 angebracht sein. Die Trägerplatte 30 kann an der Crashstruktur 16, der Traktionsbatterie 16 und/oder einem Kotflügelträger des Kraftfahrzeugs 10 getragen bzw. angebracht sein. Die Trägerplatte 30 kann in einer Vertikalebene, vorzugsweise Vertikallängsebene des Kraftfahrzeugs 10, ausgerichtet sein. Die Trägerplatte 30 kann zwischen der Crashstruktur 16 und der Traktionsbatterie 18 angeordnet sein. Beispielsweise kann die Trägerplatte 30 als ein Trägerblech ausgeführt sein.

Es ist auch möglich, dass das Kraftfahrzeug 10 eine weitere Trittstufe 26 aufweist. Die weitere Trittstufe 26 kann in einer weiteren Aussparung 28 oder in der Aussparung 24 der Crashstruktur 16 angeordnet sein. Die weitere Trittstufe 26 kann oberhalb oder unterhalb der Trittstufe 14 angeordnet sein. Die Aussparung 28 kann oberhalb oder unterhalb der Aussparung 24 angeordnet sein. Die weitere Trittstufe 26 kann wie die Trittstufe 14 ausgeführt sein. Die weitere Aussparung 28 kann wie die Aussparung 24 ausgeführt sein.

Im Ausführungsbeispiel sind die Trittstufe 14 und die Crashstruktur 16 an einer Längsaußenseite des Kraftfahrzeugs 10 zwischen einer Vorderachse und einer Hinterachse des Kraftfahrzeugs 10 angeordnet. Es ist allerdings auch möglich, dass die Trittstufe 14 und die Crashstruktur 16 bezüglich einer Vorwärtsfahrtrichtung des Kraftfahrzeugs 10 vor der Vorderachse oder hinter der Hinterachse angeordnet sind, vorzugsweise an einer Längsaußenseite des Kraftfahrzeugs 10. Es ist auch möglich, dass die Trittstufe 14 und die Crashstruktur 16 beispielsweise an einer Vorderseite des Kraftfahrzeugs 10 oder an einer Rückseite des Kraftfahrzeugs 10 angeordnet sind.

Die Traktionsbatterie 18 kann beispielsweise extern über ein an einer Ladesteckdose des Kraftfahrzeugs 10 angeschlossenes elektrisches Ladekabel geladen werden. Die Traktionsbatterie 18 kann mindestens einen elektrischen Antrieb des Kraftfahrzeugs 10 mit elektrischer Energie versorgen.

Die Traktionsbatterie 18 kann verdeckt hinter der Crashstruktur 16 und/oder der Seitenverkleidung 20 angeordnet sein. Die Traktionsbatterie 18 kann von der Crashstruktur 16 geschützt sein, z. B. bei einem Seitenaufprall auf die Crashstruktur 16 und/oder die Seitenverkleidung 20. Beispielsweise kann die Traktionsbatterie 18 (z. B. bezüglich einer Querachse des Kraftfahrzeugs 10) zwischen dem Fahrzeugrahmen 12 und der Crashstruktur 16 sowie optional der Seitenverkleidung 20 angeordnet sein. Die Traktionsbatterie 18 kann zwischen einer Vorderachse und einer Hinterachse des Kraftfahrzeugs 10 angeordnet sein.

Die Traktionsbatterie 18 kann an dem Fahrzeugrahmen 12 angebracht sein, vorzugsweise an einer Außenlängsseite eines der Hauptlängsträger des Fahrzeugrahmens 12. Die Seitenverkleidung 20 und/oder die Crashstruktur 16 kann an der Traktionsbatterie 18 getragen bzw. angebracht sein, vorzugsweise an einer (z. B. Längs-) Seitenfläche der Traktionsbatterie 18, die weg von dem Fahrzeugrahmen 12 bzw. nach außen gerichtet ist. Die Crashstruktur 16 kann an einem Gehäuse der Traktionsbatterie 18 befestigt sein, z. B. mittels Verschraubung.

Die Seitenverkleidung 20 kann eine Aussparung 32 aufweisen. Die Aussparung 32 kann beispielsweise als ein Ausschnitt und/oder eine Öffnung, vorzugsweise Durchgangsöffnung, ausgeführt sein. Die Aussparung 32 ist bevorzugt rechteckförmig. Bevorzugt rahmt die Aussparung 32 die Trittstufe 14 in der Nichtgebrauchsstellung ein. Die Aussparung 32 kann mit der Aussparung 24 der Crashstruktur 16 ausgerichtet sein. Beispielsweise können die Aussparungen 24, 32 miteinander fluchten. Die Aussparung 32 verbindet vorzugsweise eine Außenseite bzw. Vorderseite der Seitenverkleidung 20 mit einer Innenseite bzw. Rückseite der Seitenverkleidung 20. Die Rückseite kann beispielsweise hin zu dem Fahrzeugrahmen 12, der Crashstruktur 16 und/oder der Traktionsbatterie 18 gewandt sein.

Die Trittstufe 14 kann durch die Aussparung 32 hindurch bewegbar sein. In der Nichtgebrauchsstellung kann die Trittstufe 14 bezüglich der Seitenverkleidung 20 zurückversetzt oder im Wesentlich bündig mit der Seitenverkleidung 20 sein. In der Gebrauchsstellung kann die Trittstufe 14 über die Seitenverkleidung 20 hinaus überstehen bzw. aus der Aussparung 32 der Seitenverkleidung 20 herausstehen.

Die Seitenverkleidung 20 kann zwischen einer Vorderachse und einer Hinterachse des Kraftfahrzeugs 10 angeordnet sein. Die Seitenverkleidung 20 kann einen Abschnitt einer Längsseite (z. B. Fahrerlängsseite oder Beifahrerlängsseite) des Kraftfahrzeugs 10 verkleiden. Bevorzugt verkleidet die Seitenverkleidung 20 die Crashstruktur 16 und optional die Traktionsbatterie 18. Vorzugsweise verkleidet die Seitenverkleidung 20 im Wesentlichen einen gesamten Abschnitt der Längsseite des Kraftfahrzeugs 10 zwischen der Vorderachse und der Hinterachse. Beispielsweise ist die Seitenverkleidung 20 als eine Seitenvollverkleidung ausgeführt.

Die Seitenverkleidung 20 kann bezüglich einer Vorwärtsfahrtrichtung des Kraftfahrzeugs 10 hinter einem Kotflügel für die Vorderachse und/oder vor einem Kotflügel für die Hinterachse angeordnet sein.

Die Seitenverkleidung 20 kann sich im Wesentlichen parallel zu einer Längsachse des Kraftfahrzeugs 10 erstrecken. Vorzugsweise ist die Seitenverkleidung 20 auf Höhe einer Vorderachse, einer Hinterachse, der Crashstruktur 16 und/oder des Fahrzeugrahmens 12 angeordnet. Bevorzugt ist die Seitenverkleidung 20 plattenförmig. Vorteilhaft ist die Seitenverkleidung 20 vertikal ausgerichtet.

Es ist möglich, dass die Seitenverkleidung 20 eine weitere Aussparung 34 für die optionale weitere Trittstufe 26 aufweist. Die weitere Aussparung 34 kann oberhalb oder unterhalb der Aussparung 32 angeordnet sein. Die weitere Aussparung 34 kann wie die Aussparung 32 ausgeführt sein.

Die Arbeitsplattform 22 kann mittels der Trittstufe 14 und der optionalen weiteren Trittstufe 26 erreichbar sein. Zum Besteigen der Arbeitsplattform 22 kann die Trittstufe 14 und die optionale weitere Trittstufe 26 in die Gebrauchsstellung bewegt werden.

Die Arbeitsplattform 22 kann bezüglich einer Vorwärtsfahrtrichtung des Kraftfahrzeugs 10 hinter einem Fahrerhaus des Kraftfahrzeugs 10 angeordnet sein, vorzugsweise angrenzend an eine Rückwand des Fahrerhauses. Die Arbeitsplattform 22 kann oberhalb von dem Fahrzeugrahmen 12 angeordnet sein, zweckmäßig direkt oberhalb des Fahrzeugrahmens 12. Vorzugsweise kann die Arbeitsplattform 22 auf dem Fahrzeugrahmen 12 abgestützt sein. Die Arbeitsplattform 22 kann zwischen einer Vorderachse und einer Hinterachse des Kraftfahrzeugs 10 angeordnet sein. Die Arbeitsplattform 22 kann, vorzugsweise direkt, oberhalb von der Trittstufe 14, der Crashstruktur 16, der Traktionsbatterie 18 und/oder der Seitenverkleidung 20 angeordnet sein.

Bei Begehung der Arbeitsplattform 22 können beispielsweise fahrerhausrückseitige Anschlüsse des Kraftfahrzeugs 10 und/oder frontseitige Anschlüsse eines Anhängers oder Aufliegers des Kraftfahrzeugs 10 zugänglich sein. Die Arbeitsplattform 22 kann beispielsweise eine Rechteckform aufweisen. Die Arbeitsplattform 22 ist vorzugsweise horizontal ausgerichtet.

Es ist allerdings auch möglich, dass die Trittstufe 14 nicht zum Besteigen der Arbeitsplattform 22 angeordnet ist. Stattdessen kann die Trittstufe 14 an jeglicher anderen Position des Kraftfahrzeugs 10 zum Besteigen des Kraftfahrzeugs 10 angeordnet sein. Beispielsweise kann die Trittstufe 14 zum Besteigen eines Fahrerhauses des Kraftfahrzeugs 10 angeordnet sein. Alternativ kann die Trittstufe 14 beispielsweise zum Besteigen eines Aufbaus, z. B. eines Ladeaufbaus, oder eines Anhängers oder Aufliegers des Kraftfahrzeugs 10 angeordnet sein.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Crashstruktur und/oder der Trittstufe des unabhängigen Anspruchs 1 offenbart.

### Bezugszeichenliste

- 10: Kraftfahrzeug
- 12: Fahrzeugrahmen
- 14: Trittstufe
- 16: Crashstruktur
- 18: Traktionsbatterie
- 20: Seitenverkleidung
- 22: Arbeitsplattform
- 24: Aussparung
- 26: Weitere Trittstufe
- 28: Weitere Aussparung
- 30: Trägerplatte
- 32: Aussparung
- 34: Weitere Aussparung

## Patentansprüche

1. Vorrichtung zum Besteigen eines Kraftfahrzeugs (10), aufweisend:
eine, vorzugsweise im Wesentlichen plattenförmige, Crashstruktur (16), die dazu ausgebildet ist, sich unter Energieabbau bei einem Aufprall vorbestimmt zu verformen, wobei die Crashstruktur (16) eine, vorzugsweise rechteckförmige, Aussparung (24) aufweist; und
eine, vorzugsweise bewegbare, Trittstufe (14) zum Besteigen des Kraftfahrzeugs (10), wobei die Trittstufe (14) in der Aussparung (24) angeordnet ist.

2. Vorrichtung nach Anspruch 1, wobei:
die Trittstufe (14) zwischen einer, vorzugsweise horizontal ausgerichteten, Gebrauchsstellung und einer, vorzugsweise vertikal ausgerichteten, Nichtgebrauchsstellung bewegbar ist.

3. Vorrichtung nach Anspruch 2, wobei mindestens eines der nachfolgenden Merkmale erfüllt ist:
die Trittstufe (14) füllt in der Nichtgebrauchsstellung die Aussparung (24);
die Trittstufe (14) liegt in der Nichtgebrauchsstellung in einer Ebene, vorzugsweise Vertikalebene, mit der Aussparung (24) und/oder der Crashstruktur (16);
die Trittstufe (14) ist dazu ausgebildet, in der Nichtgebrauchsstellung als eine zusätzliche Crashstruktur innerhalb der Aussparung (24) der Crashstruktur (16) zu wirken; und
die Aussparung (24) rahmt die Trittstufe (14) in der Nichtgebrauchsstellung ein.

4. Vorrichtung nach einem der vorherigen Ansprüche, wobei:
die Trittstufe (14) die Crashstruktur (16) im Bereich der Aussparung (24) verstärkt und/oder versteift.

5. Vorrichtung nach einem der vorherigen Ansprüche, wobei:
die Aussparung (24) als ein Ausschnitt und/oder eine Öffnung, vorzugsweise Durchgangsöffnung, ausgeführt ist.

6. Vorrichtung nach einem Ansprüche 2 bis 5, wobei:
oberhalb der Trittstufe (14) in der Nichtgebrauchsstellung ein Freiraum, vorzugsweise ein Spalt, in der Aussparung (24) zum Ergreifen einer Oberkante der Trittstufe (14) zum Bewegen der Trittstufe (14) in die Gebrauchsstellung freibleibt.

7. Vorrichtung nach einem der vorherigen Ansprüche, wobei:
die Trittstufe (14) klappbar ist.

8. Vorrichtung nach einem der vorherigen Ansprüche, wobei:
die Crashstruktur (16) als eine, vorzugsweise profilierte, Crashbeplankung ausgeführt ist; und/oder
die Crashstruktur (16) mehrere Profilbahnen aufweist, die vorzugsweise einen U-förmigen, V-förmigen oder wellenförmigen Querschnitt aufweisen; und/oder
die Crashstruktur (16) als ein Rollprofil oder ein Strangprofil ausgeführt ist.

9. Vorrichtung nach einem der vorherigen Ansprüche, wobei:
die Crashstruktur (16) eine weitere Aussparung (28) oberhalb der Aussparung (24) aufweist,
die Vorrichtung eine weitere, vorzugsweise bewegbare, Trittstufe (26) zum Besteigen des Kraftfahrzeugs (10) aufweist, die in der weiteren Aussparung (28) angeordnet ist.

10. Vorrichtung nach einem der vorherigen Ansprüche, ferner aufweisend:
eine Seitenverkleidung (20), vorzugsweise Seitenvollverkleidung,
wobei:
die Seitenverkleidung (20) die Crashstruktur (16) verkleidet, und/oder
die Seitenverkleidung (20) eine Aussparung (32) aufweist, die mit der Aussparung (24) der Crashstruktur (16) ausgerichtet ist und durch die hindurch die Trittstufe (14) bewegbar ist.

11. Vorrichtung nach einem der vorherigen Ansprüche, ferner aufweisend:
eine Traktionsbatterie (18), die von der Crashstruktur (16) geschützt ist, wobei vorzugsweise:
die Traktionsbatterie (18) in einer Blickrichtung auf eine Außenseite der Crashstruktur (16), bevorzugt geschützt und/oder verdeckt, hinter der Crashstruktur (16) angeordnet ist; und/oder
die Crashstruktur (16) an einem Gehäuse der Traktionsbatterie (18) befestigt, vorzugsweise verschraubt, ist.

12. Vorrichtung nach einem der vorherigen Ansprüche, ferner aufweisend:
eine Trägerplatte (30), wobei die Trittstufe (14) bewegbar, vorzugsweise klappbar, an der Trägerplatte (30) angebracht ist.
wobei Trägerplatte (30) vorzugsweise in einer Blickrichtung auf eine Außenseite der Crashstruktur (16) hinter der Crashstruktur (16) angeordnet ist.

13. Kraftfahrzeug (10), vorzugsweise Nutzfahrzeug, aufweisend:
eine Vorrichtung nach einem der vorherigen Ansprüche.

14. Kraftfahrzeug (10) nach Anspruch 13, ferner aufweisend:
eine Vorderachse;
eine Hinterachse;
wobei die Crashstruktur (16) an einer Längsaußenseite des Kraftfahrzeugs (10) zwischen der Vorderachse und der Hinterachse angeordnet ist, vorzugsweise auf einer Höhe mit der Vorderachse und der Hinterachse.

15. Kraftfahrzeug (10) nach Anspruch 13 oder Anspruch 14, ferner aufweisend:
eine Arbeitsplattform (22),
wobei die Trittstufe (14) zum Besteigen der Arbeitsplattform (22) angeordnet ist, wobei vorzugsweise:
die Arbeitsplattform (22) bezüglich einer Vorwärtsfahrtrichtung des Kraftfahrzeugs (10) hinter einem Fahrerhaus des Kraftfahrzeugs (10) angeordnet ist; und/oder
die Arbeitsplattform oberhalb von einem Fahrzeugrahmen (12) des Kraftfahrzeugs (10) angeordnet ist; und/oder
mittels der Arbeitsplattform (22) mindestens ein fahrerhausrückseitiger Anschluss des Kraftfahrzeugs (10) und/oder mindestens ein frontseitiger Anschluss eines Anhängers des Kraftfahrzeugs (10) zugänglich ist.
